# EUROPÄISCHE PATENTSCHRIFT

(11) **EP 0 667 610 B1**
(45) Veröffentlichungstag und Bekanntmachung des Hinweises auf die Patenterteilung: **01.09.1999**
(21) Anmeldenummer: 95101668.2
(22) Anmeldetag: 08.02.1995
(51) Int. Cl.: G11B 15/44

(54) **Elektromechanisch gesteuertes Kassetten-Laufwerk**
Electromechanically controlled cassette drive
Dispositif d'entraînement électromécanique de cassette

(30) Priorität: 09.02.1994 DE 4404056
(43) Veröffentlichungstag der Anmeldung: 16.08.1995
(73) Patentinhaber: GRUNDIG Aktiengesellschaft, 90762 Fürth (DE)
(72) Erfinder: Östheimer, Willi, Grundig E.M.V., D-90762 Fürth (DE)

(56) Entgegenhaltungen:
- DE-C- 4 207 674
- GB-A- 2 229 853
- US-A- 4 819 891
- US-A- 4 922 357
- US-A- 4 956 734
- US-A- 5 005 094
- US-A- 5 062 013

## Beschreibung

Die Erfindung bezieht sich auf ein elektromechanisch gesteuertes Kassetten-Laufwerk nach dem Oberbegriff des Anspruchs 1. Insbesondere baut die Erfindung auf dem elektromechanisch gesteuerten Kassetten-Laufwerk nach DE-C1-4207674 auf. In diesem Dokument wird eine Einrichtung geschützt, die bei einem elektromechanisch gesteuerten Kassetten-Laufwerk die Andruckrolle und den Magnetkopf durch Drücken der Eject-Taste in eine Nullstellung überführt, auch wenn kein Strom vorhanden ist, d.h. auch wenn der Antriebsmotor nicht läuft. Als Grundlage wird bei dem genannten Dokument von einem Kassetten-Laufwerk ausgegangen, welches die für ein fernsteuerbares Laufwerk erforderlichen Funktionen, wie Start, schneller Vorlauf, schneller Rücklauf, Review und Stop ohne Einsatz von Magneten durchführen kann. Die gewünschten Funktionen werden dabei lediglich durch Stromumpolung des Motors erreicht. Ein auf einem konzentrisch zur Tonwellenachse gelagerten Schwenkhebel sitzendes Schwenkrad ist mit einem Zahnrad auf der Schwungmasse dauernd im Eingriff. Wird die Motordrehrichtung umgekehrt, schwenkt das Laufwerk von einem Wickelkern-Mitnehmer zum anderen. Dabei durchläuft es den Eingriffsbereich eines Servorades, welches einen festen Lagerpunkt auf dem Laufwerk-Chassis besitzt. Einstückig mit diesem Servorad ist stirnseitig eine Kurvenscheibe verbunden. Radial anliegend an der Kurvenscheibe ist ein im Laufwerk-Chassis gelagerter Schieber angebracht, der seinerseits wieder auf einen Tonkopf-Andruckrollen-Hebel über eine Federverbindung wirkt. Erreicht nun das Schwenkrad den Eingriffsbereich des Servorades, so wird dieses in Drehung versetzt und die Kurvenscheibe bewegt in entsprechender Weise den anliegenden Schieber. Das Servorad besitzt an seinem Umfang einen Zahn- und einen Leerbereich. Durch eine bestimmte Anordnung der Kurvenscheibe in Bezug auf den Drehpunkt des Servorades bewirkt der mit Federkraft anliegende Schieber eine stabile bzw. instabile Stellung des Servorades, nachdem das Schwenkrad den Eingriffsbereich des Servorades verlassen hat. So kann z.B. das Schwenkrad sich in Eingriff mit dem aufwickelnden Vorlauf-Wickelkern-Mitnehmer befinden, während der Schieber an der Kurvenscheibe so anliegt, daß die Andruckrolle und der Tonkopf in Startposition stehen und das Servorad eine stabile Lage einnimmt. Wird nun die Motordrehrichtung gewechselt, so schwenkt das Schwenkrad in Richtung des Servorades, erreicht dessen Eingriffsbereich und dreht es soweit, bis die durch die Kurvenformgebung gegebene stabile Stellung verlassen ist. Die Kurvenscheibe wird nun in eine den anliegenden Schieber in eine Nullstellung bringende Lage gebracht. Wenn dann sofort die Motordrehrichtung gewechselt wird, schwenkt das Schwenkrad wieder in seine Stellung zum Antrieb des aufwickelnden Vorlauf-Wickelkern-Mitnehmers, das Band wird im schnellen Vorlauf bewegt. Beim erneuten Wechsel der Motordrehrichtung bewegt sich das Schwenkrad wieder in Richtung des Servorades, erreicht dieses in einer Stellung, in der der Tonkopf und die Andruckrolle aus der Kassette ausgefahren sind und schwenkt weiter in Richtung des abwickelnden Rücklauf-Wickelkern-Mitnehmers. Dabei wird das Servorad wiederum in Drehung versetzt und erreicht eine Stellung, in der der an der Kurvenscheibe anliegende Schieber den Tonkopf in eine bandberührende Stellung bringt, die Andruckrolle jedoch zur Tonwelle noch einen geringen Abstand hat. Ist das Schwenkrad am abwickelnden Rücklauf-Wickelkern-Mitnehmer angelangt, treibt es diesen in Richtung Rücklauf an, das Band wird zurückgespult und der Tonkopf kann vom Tonband Signale lesen.

Dieses Laufwerksprinzip gestattet also durch folgerichtiges Umpolen des Motors, verbunden mit einer zeitlichen Steuerung, die gewünschten Funktionen des Kassetten-Laufwerks zu erreichen. Es kann, wie im Oberbegriff des Anspruchs 1 erwähnt, für den Einsatz in Diktiergeräten und Telefon-Anrufbeantwortern eingesetzt werden. Die Praxis hat gezeigt, daß bei einem Einsatz in einem Telefon-Anrufbeantworter die dort verlangten Funktionen in einer ausreichend kurzen Zeit geschaltet werden können. So ist es dort beispielsweise unerheblich, ob beim Schalten von Start auf Rücklauf eine sehr kurze oder eine etwas längere Zeit vergeht. Da ein Telefonanrufbeantworter automatisch und in den meisten Fällen ohne Anwesenheit eines Benutzers arbeitet, können höhere Schaltzeiten akzeptiert werden. Anders sieht es jedoch beim Einsatz des Laufwerkes in einem Diktiergerät aus. Dort sind wesentlich kürzere Schaltzeiten zwischen den einzelnen Funktionen notwendig, als dies bei einem Telefonanrufbeantworter der Fall ist. Es ist sowohl beim Diktieren, als auch beim Abhören eines Textes wichtig, das zuletzt Gesprochene bzw. Gehörte nochmals zu hören. Es muß also von der Aufnahme- bzw. Wiedergabe-Position in den Rücklauf und anschließend wieder in den Startbetrieb geschaltet werden können. Die jeweilige Schaltzeit soll dabei möglichst kurz sein, weil lange Schaltzeiten als sehr lästig empfunden werden. Die Schaltzeiten bei dem eingangs beschriebenen Kassetten-Laufwerk sind für ein Diktiergerät zu lang. So muß beispielsweise beim Schalten von Start auf Rücklauf (Kurzrücklauf) und umgekehrt, ein Schwenkrad vom Eingriff in den Vorlauf-Wickelmitnehmer in den Eingriff mit dem Rücklauf-Wickelmitnehmer und umgekehrt gebracht werden. Der Weg, den das Schwenkrad dabei zurücklegen muß, ist sehr groß, wodurch eben eine relativ große Schaltzeit zustande kommt.

Aufgabe der Erfindung ist es daher, ein elektromechanisch gesteuertes Diktiergeräte-Laufwerk zu schaffen, welches ohne Magnete arbeitet und welches so kurze Schaltzeiten zwischen den einzelnen Lauffunktionen hat, daß ein einwandfreier Diktiergerätebetrieb möglich ist.

Diese Aufgabe wird durch die Merkmale des kennzeichnenden Teils des Anspruchs 1 gelöst. Die Unteransprüche geben zweckmäßige Ausgestaltungen an.

Durch die kennzeichnenden Merkmale werden die Nachteile des Laufwerks nach DE-C1-4207674 vermieden. Ein wesentlicher Unterschied zwischen dem erfindungsgemäßen und dem bekannten Laufwerk ist der, daß beim ersteren nach Einlegen einer Kassette in den Kassettenfachdeckel und Schließen desselben, der Zentralschieber 12 bereits in eine Vorbereitungsstellung gebracht wird, während bei letzterem diese Vorbereitungsstellung erst beim Betrieb des Laufwerks über die Kurvenscheibe erreicht wird. Damit wird erreicht, daß der Bereich der Verzahnung an dem Servorad 11 beim erfindungsgemäßen Laufwerk wesentlich reduziert werden kann. Es muß also beispielsweise beim Schalten von Start nach Rücklauf und umgekehrt, vom Schwenkrad 8 nur ein kurzer Zahnbereich des Servorades 11 durchlaufen werden. Weiterhin wird durch Einführung eines weiteren Schwenkrades 9 auf dem verlängerten Hebelarm des Schwenkhebels 7 der notwendige Schwenkbereich des Schwenkrades 8 wesentlich reduziert. Durch diese Maßnahmen wird eine für den Diktierbetrieb ausreichend kurze Schaltzeit erreicht.

Die Erfindung soll nun anhand der Zeichnungen näher erläutert werden. Es zeigen:
- Fig. 1: eine schematische Darstellung der erfindungswesentlichen Teile des elektromechanisch gesteuerten Kassetten-Laufwerks in der Nullstellung,
- Fig. 2: eine Darstellung nach Fig. 1, jedoch in Rücklaufstellung,
- Fig. 3: die gleiche Darstellung während des Schaltens von Rücklauf in Start,
- Fig. 4 und Fig. 5: die gleiche Darstellung in Start und Vorlaufstellung.

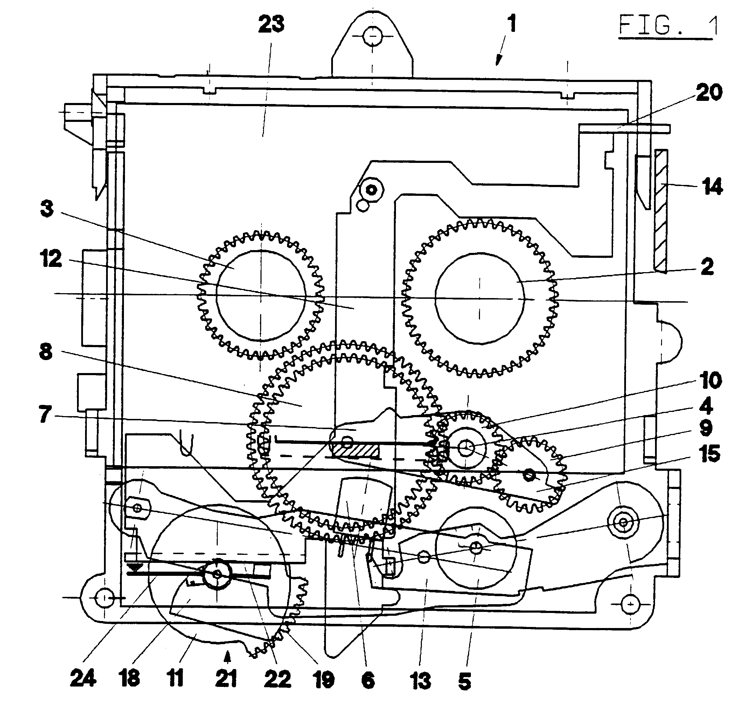

Die schematische Darstellung in Fig. 1 zeigt eine Draufsicht auf die wesentlichen Teile des erfindungsgemäßen Kassetten-Laufwerks. Alle Teile befinden sich in Nullstellung, d.h. in einer Stellung, in der eine Kassette eingelegt und entnommen werden kann. Der Zentralschieber 12, der durch eine nicht dargestellte federnde Verbindung mit dem Hebel 13 gekoppelt ist, befindet sich in seiner extremsten, der Laufwerk-Vorderseite zugekehrten Lage, in die er durch eine nicht dargestellte Feder gedrückt wird. In die beiden Wickelkern-Mitnehmer 2 und 3 sind keine Antriebsräder eingekuppelt. Auf dem Schwenkhebel 7 ist das Schwenkrad 8 gelagert, das ständig in das auf der Tonwellen-Achse 4 und mit der Schwungmasse fest verbundene Zahnrad 10 eingreift. Ebenfalls fest in Eingriff mit dem Zahnrad 10 ist das Schwenkrad 9, welches auf dem einstückig mit dem Schwenkhebel 7 hergestellten Ausleger 15 gelagert ist. Die Andruckrolle 5 und der Tonkopf 6 befinden sich in einer aus dem Kassettenbereich ausgefahrenen Stellung. Beide Teile sitzen auf dem Hebel 13, mit dem sie in ihre jeweiligen Positionen gebracht werden können. Der vordere Anschlag des Zentralschiebers 12 wird durch die Schieberkante 22 gebildet, die an einer der Nullstellung entsprechenden Seite der Kurvenscheibe 18 anliegt. Der Zentralschieber 12 weist an der dem Laufwerk seitlich hinten zugekehrten Seite einen Abbug 20 auf. Neben diesem, mit einem gewissen Abstand benachbart, ist ein Teil 14 des Kassettenfach-Deckels dargestellt. Dieses Teil 14 liegt so im Drehlagerbereich des Kassettenfach-Deckels, daß es eine quer zum Abbug 20 gerichtete Bewegung ausführt, wenn der Kassettenfach-Deckel geöffnet oder geschlossen wird. Wird nun eine Kassette in den Kassettenfach-Deckel eingelegt und dieser geschlossen, so bewegt sich das Teil 14 auf den Abbug 20 zu, kontaktiert diesen und bewegt den Zentralschieber 12 auf die Rückseite des Laufwerks zu. Durch eine Feder 24, die das Servorad 11 entgegen dem Uhrzeigerdrehsinn zu drehen versucht, wird die Kurvenscheibe 18 immer mit der Schieberkante 22 in Berührung gehalten. Bewegt sich nun die Schieberkante 22 beim Schließen des Kassettenfach-Deckels auf die Rückseite des Laufwerks zu, so folgt ihr das Servorad 11 mit einer entsprechenden Drehung.

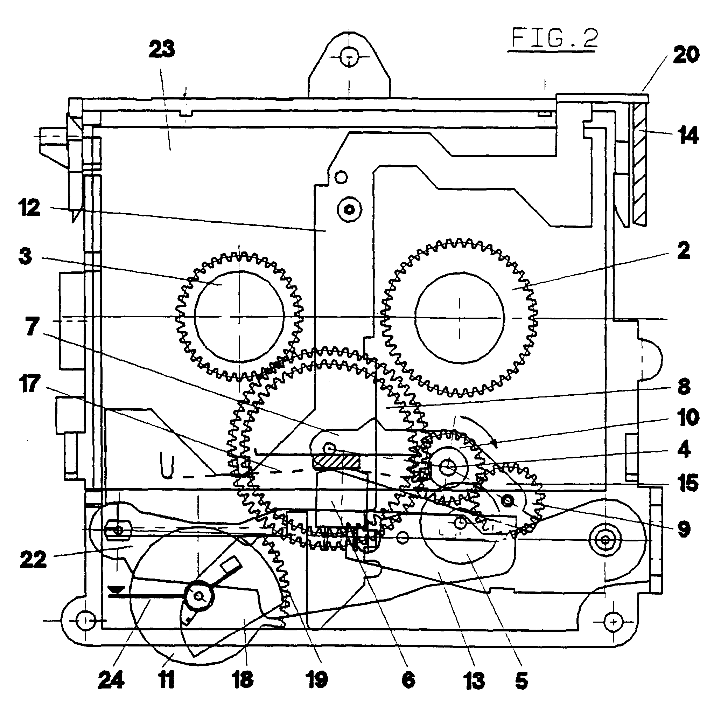

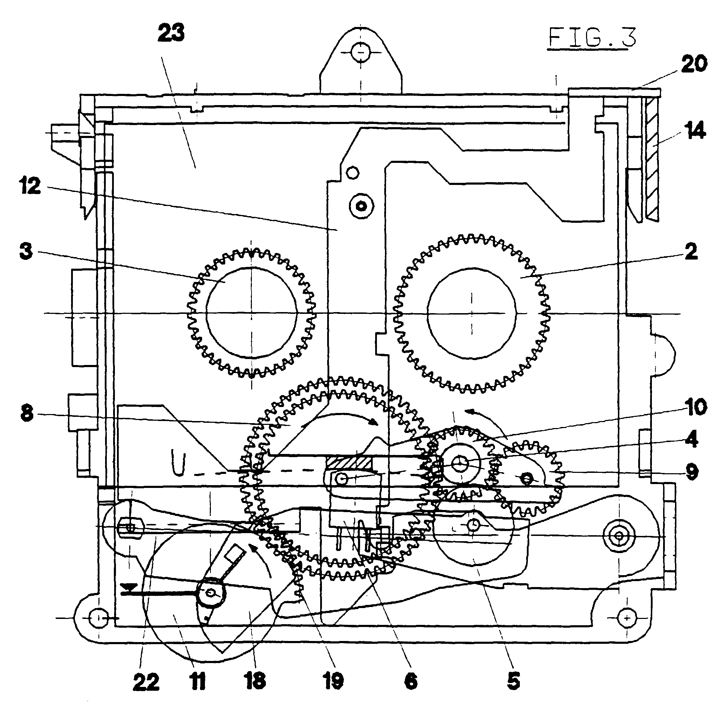

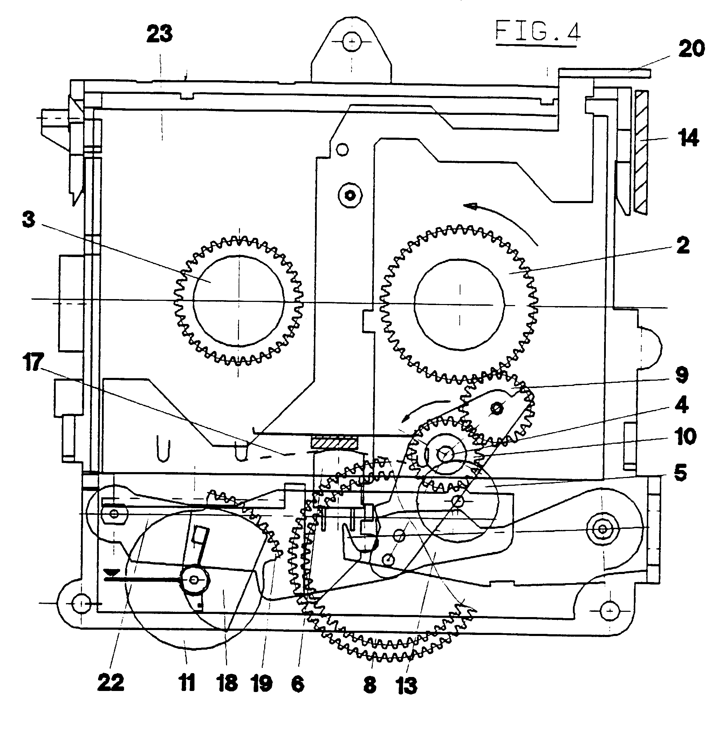

Die beim geschlossenen Kassettenfach-Deckel erreichten Positionen der Laufwerk-Teile sind in Fig. 2 dargestellt. Der Hebel 13 hat eine solche Position eingenommen, daß das Tonband 17 den Tonkopf 6 schon leicht umschlingt und die Andruckrolle 5 noch einen gewissen Abstand zur Tonwelle 4 hat. Die Position des Zentralschiebers 12 kann als Vorbereitungsstellung bezeichnet werden, in der zwar schneller Vorlauf und schneller Rücklauf, aber noch kein Startbetrieb möglich ist. Wenn sich, wie in Fig. 2 gezeichnet, das Zahnrad 10 im Uhrzeigerdrehsinn dreht, so wird der Schwenkhebel 7 im gleichen Drehsinn so um die Tonwellenachse 4 geschwenkt, daß das Schwenkrad 8 mit dem Wickelkern-Mitnehmer 3 in Eingriff kommt. In diesem Fall ist das Laufwerk in der Rücklauffunktion, das Tonband in der Kassette wird zurückgespult. Die Stellung des Servorades 11 ist so, daß der Zahnbereich 19 sich in einer Lage befindet, in der er von dem Schwenkrad 8 erfaßt werden kann, wenn sich die Tonwellendrehrichtung ändert und das Schwenkrad 8 in gleicher Richtung geschwenkt wird. Der dann durchgeführte Schaltvorgang ist in Fig. 3 dargestellt. Die Drehrichtung der Tonwelle 4 und des Zahnrads 10 ist nun entgegen dem Uhrzeigerdrehsinn. Das Schwenkrad 3 hat auf seinem Schwenkweg den Zahnbereich 19 erreicht und dreht damit das Servorad 11 in der mit dem Pfeil angezeigten Drehrichtung. Das sich drehende Servorad 11 drückt nun über die Schieberkante 22 den Zentralschieber 12 auf die Rückseite des Kassetten-Laufwerks zu. Kontinuierlich mit dieser Schieberbewegung des Zentralschiebers 12 werden der Tonkopf 6 und die Andruckrolle 5 auf das Tonband 17 bzw. auf die Tonwelle 4 zu bewegt. Hat das Schwenkrad 8 den Zahnbereich 19 wieder verlassen, befindet sich das Servorad 11 in einer Stellung, in der die Kurvenscheibe 18 den Zentralschieber 12 in seine rückseitige Extremstellung geschoben hat, und ihn dort hält. Der Tonkopf 6 hat seine eingefahrene Extremstellung erreicht und die Andruckrolle 5 drückt das Tonband 17 gegen die Tonwelle 4. Der Abbug 20 hat vom Teil 14 des Kassettenfach-Deckels abgehoben. Das Schwenkrad 8 schwenkt nun so weit weiter, bis das Schwenkrad 9 mit dem Wickelkern-Mitnehmer 2 in Eingriff ist. Damit ist die Startstellung des Laufwerks erreicht, wie in Fig. 4 dargestellt. Das Tonband 17 wird von der Tonwelle 4, die sich in der gezeigten Pfeilrichtung dreht, transportiert und vom Wickelkern-Mitnehmer 2 aufgewickelt.

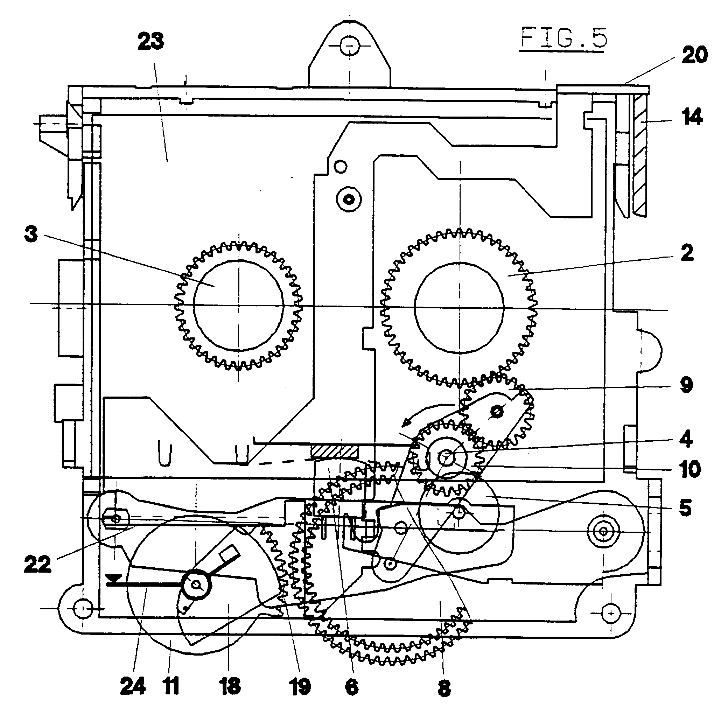

Um zu der in Fig. 5 dargestellten Vorlauf-Funktion zu gelangen, muß die Tonwelle für kurze Zeit ihre Start-Drehrichtung ändern, bis das Schwenkrad 8 in den Zahnbereich 19 des Servorades 11 gelangt ist und dieses aus der Haltestellung zur Schieberkante 22 gedreht hat. Das Servorad befindet sich dann in der in Fig. 5 gezeichneten Stellung. Der Abbug 20 hat das Teil 14 kontaktiert und der Zentralschieber 12 ist in der Vorbereitungsstellung. Wird nun die Tonwellen-Drehrichtung in die in Fig. 5 gezeigte Pfeilrichtung wieder geändert, so schwenkt das Schwenkrad 9 in Eingriff mit dem Wickelkern-Mitnehmer 2. Das Tonband wird im schnellen Vorlauf angetrieben.

Durch die erfindungsgemäße Anordnung der Laufwerkteile in Verbindung mit einer entsprechenden zeitlichen Steuerung der Drehrichtungen der Tonwelle 4, auf die hier nicht näher eingegangen werden soll, werden die in der Aufgabenstellung geforderten kurzen Schaltzeiten erreicht und das Laufwerk erfüllt die Forderungen, die an ein Diktiergeräte-Laufwerk gestellt werden.

## Patentansprüche

1. Elektromechanisch gesteuertes Kassetten-Laufwerk (1), insbesondere für den Einsatz in Diktiergeräten oder Telefon-Anrufbeantwortern, für den Betrieb mit einer Audio-Kassette mit zwei Wickelkernen, Öffnungen zum Eintauchen von Tonköpfen und einer Andruckrolle, sowie einer Öffnung zum Eintauchen einer das Tonband (17) antreibenden Tonwelle (4), wobei das Kassetten-Laufwerk (1) folgende Teile aufweist:
- einen Motor, eine Tonwelle (4), eine Andruckrolle (5), mindestens einen Tonkopf (6) und zwei Wickelkern-Mitnehmer (2,3),
- ein Schwenkrad (8), das auf einem um die Tonwellen-Achse (4) gelagerten Schwenkhebel (7) sitzt, und dauernd mit einem konzentrisch zur Tonwelle (4) auf der Schwungmasse gelagerten Zahnrad (10) in Eingriff steht,
- ein Servorad (11) mit einer Kurvenscheibe (18) und einem an dieser mit Federkraft anliegenden Zentralschieber (12), welcher zu einem die Andruckrolle (5) und den Tonkopf (6) tragenden Hebel (13) eine federnde Verbindung aufweist,
- einen Kassettenfach-Deckel (14) und eine Halteklinke für die Verrastung des geschlossenen Kassettenfach-Deckels (14) sowie
- eine Eject-Taste, welche auf die genannte Halteklinke und auf die auf der Kurvenscheibe (18) sitzenden Nocken so einwirkt, daß beim Drücken dieser Eject-Taste die Halteklinke den Kassettenfach-Deckel (14) freigibt und das Servorad (11) in eine Nullstellung gebracht wird,
**dadurch gekennzeichnet**, daß
- der Schwenkhebel (7) einen über seinen Drehpunkt (4) hinaus verlängerten Ausleger (15) aufweist, auf dem ein zweites Schwenkrad (9) drehbar gelagert ist, um den notwendigen Schwenkwinkel des Schwenkhebels (7) zu reduzieren, wenn die Motordrehrichtung zwischen Rücklauf und Vorlauf wechselt,
- das Servorad (11) an seinem Umfang einen Zahnbereich (19) von weniger als 90° seines Umfangs aufweist,
- der Zentralschieber (12) eine in seiner Ebene längs und quer sich erstreckende Vergrößerung aufweist, die in einem senkrecht zur Schieberebene stehenden Abbug (20) endet,
- dieser Abbug (20) so positioniert ist, daß er in den Schwenkbereich des Kassettenfach-Deckels (14) eingreift und beim Schließen des Kassettenfach-Deckels (14) der Abbug (20) mit diesem kontaktiert wird und dadurch der Zentralschieber (12) eine Längsbewegung ausführt.

2. Elektromechanisch gesteuertes Kassetten-Laufwerk (1) nach Anspruch 1,
**dadurch gekennzeichnet**, daß der Weg des Zentralschiebers (12) beim Schließen des Kassettenfach-Deckels (14) so begrenzt ist, daß der Hebel (13) nur so weit geschwenkt wird, daß die Andruckrolle (5) zur Tonwelle (4) noch einen sichtbaren Abstand aufweist.

3. Elektromechanisch gesteuertes Kassetten-Laufwerk nach Anspruch 2,
**dadurch gekennzeichnet**, daß der sichtbare Abstand 0,2 bis 1 mm beträgt.

4. Elektromechanisch gesteuertes Kassetten-Laufwerk (1) nach Anspruch 1,
**dadurch gekennzeichnet**, daß der Zahnbereich an dem Servorad (11) sich auf ca. 65° erstreckt.

5. Elektromechanisch gesteuertes Kassetten-Laufwerk (1) nach Anspruch 1,
**dadurch gekennzeichnet**, daß das Schwenkrad (3) als Stufenrad ausgebildet ist.

6. Elektromechanisch gesteuertes Kassetten-Laufwerk (1) nach den Ansprüchen 1 bis 5,
**dadurch gekennzeichnet**, daß
zwischen dem Laufwerk-Rahmen (23) und dem Servorad (11) eine Feder (24) vorhanden ist, die das Servorad mit einem, auf das Laufwerk gesehen, entgegen dem Uhrzeigerdrehsinn wirkenden Drehmoment beaufschlagt.

## Claims

1. Electromechanically controlled cassette drive (1), in particular for use in dictating machines or telephone answering machines, for operation with an audio cassette having two winding cores, openings for inserting sound heads and a pressure roller, and also an opening for inserting a capstan (4) which drives the recording tape (17), the cassette drive (1) having the following parts:
- a motor, a capstan (4), a pressure roller (5), at least one sound head (6) and two winding core drivers (2, 3),
- a swivelling wheel (8) which is seated on a swivelling lever (7) mounted on the capstan spindle (4) and which is continuously engaged with a gear (10) mounted concentrically with respect to the capstan (4) on the flywheel,
- a servo wheel (11) with a cam disc (18) and a central slider (12) which rests against the latter with spring force and which has a resilient link to a lever (13) carrying the pressure roller (5) and the sound head (6),
- a cassette compartment lid (14) and a holding pawl for latching the closed cassette compartment lid (14), and also
- an eject key which acts on the said holding pawl and the cams seated on the cam disc (18) in such a way that, when said eject key is pressed, the holding pawl releases the cassette compartment lid (14) and the servo wheel (11) is set to a neutral position,
characterized in that
- the swivelling lever (7) has an arm (15) which is extended beyond its point of rotation (4) and on which a second swivelling wheel (9) is rotatably mounted in order to reduce the necessary swivelling angle of the swivelling lever (7) when the direction of motor rotation changes between rewind and forward wind,
- the servo wheel (11) has a toothed region (19) of less than 90° of its circumference at its circumference,
- the central slider (12) has an enlarged section which extends longitudinally and transversely in its plane and which terminates in a bent section (20) situated perpendicularly with respect to the slider plane,
- said bent section (20) is positioned in such a way that it engages in the swivelling range of the cassette compartment lid (14) and, when the cassette compartment lid (14) is closed, the bent section (20) is contacted by the latter and consequently the central slider (12) carries out a longitudinal movement.

2. Electromechanically controlled cassette drive (1) according to Claim 1, characterized in that the path of the central slider (12) during the closure of the cassette compartment lid (14) is limited in such a way that the lever (13) is swivelled only so far that the pressure roller (5) still has a visible spacing from the capstan (4).

3. Electromechanically controlled cassette drive according to Claim 2, characterized in that the visible spacing is 0.2 to 1 mm.

4. Electromechanically controlled cassette drive (1) according to Claim 1, characterized in that the toothed region on the servo wheel (11) extends to approximately 65°.

5. Electromechanically controlled cassette drive (1) according to Claim 1, characterized in that the swivelling wheel (8) is formed as a stepped wheel.

6. Electromechanically controlled cassette drive (1) according to Claims 1 to 5, characterized in that there is present between the drive frame (23) and the servo wheel (11) a spring (24) which acts upon the servo wheel with a torque acting anti-clockwise looking down onto the drive.

## Revendications

1. Dérouleur de cassette (1) à commande électromécanique, destiné notamment à être utilisé dans des dictaphones ou dans des répondeurs téléphoniques, pour le fonctionnement avec une cassette audio comportant deux mandrins de bobinage, des ouvertures pour l'introduction de têtes son et un galet de pression, ainsi qu'une ouverture pour l'introduction d'un arbre (4) associé au son, qui entraîne la bande son (17), le dérouleur de cassette (1) possédant les éléments suivants :
- un moteur, un arbre (4) associé au son, un galet de pression (5), au moins une tête son (6) et deux dispositifs (2,3) d'entraînement des mandrins de bobinage,
- une roue pivotante (8), qui prend appui sur un levier pivotant (7) monté autour de l'axe (4) de l'arbre associé au son et engrène en permanence avec un pignon (10), qui est monté concentriquement à l'arbre (4) associé au son, sur la masse d'inertie,
- une roue d'asservissement (11) comportant un disque à cames (18) et un poussoir central (12), qui s'applique contre ce disque au moyen de la force d'un ressort et qui est réuni selon une liaison élastique à un levier (13), qui porte le galet de pression (5) et la tête son (6),
- un couvercle (14) pour le boîtier de cassette et un cliquet de retenue pour le verrouillage du couvercle fermé (14) du cliquet à cassette, et
- une touche d'éjection, qui agit sur ledit cliquet de retenue et sur les cames situées sur le disque à cames (18), de telle sorte que, lors de l'enfoncement de cette touche d'éjection, le cliquet de retenue libère le couvercle (14) du boîtier de cassette et place la roue de servocommande (11) dans une position de zéro,
caractérisé en ce que
- le levier pivotant (7) possède un bras en console (15) qui se prolonge au-delà de son centre de rotation (4) et sur lequel une seconde roue pivotante (9) est montée de manière à pouvoir tourner de manière à réduire l'angle de pivotement nécessaire du levier pivotant (7) lorsque le sens de rotation du moteur est commuté du sens rétrograde au sens d'avance,
- que la roue d'asservissement (11) possède sur sa périphérie une zone d'entrée (19) s'étendant sur moins de 90° de sa périphérie,
- que le poussoir central (12) possède un prolongement qui s'étend dans son plan longitudinalement et transversalement par rapport à lui-même et qui se termine par une partie repliée (20) perpendiculaire au plan du poussoir,
- cette partie repliée (20) est positionnée de telle sorte qu'elle s'engage dans la zone de pivotement du couvercle (14) du boîtier de cassette et, lors de la fermeture du couvercle (14) du boîtier de cassette, ce couvercle vient en contact avec la partie repliée (20) et de ce fait le poussoir central (12) exécute un déplacement longitudinal.

2. Dérouleur de cassette (1) à commande électromécanique selon la revendication 1,
caractérisé en ce que la course de déplacement du poussoir central (12) lors de la fermeture du couvercle (14) du boîtier de cassette est limitée de telle sorte que le levier (13) pivote juste suffisamment pour que le galet de pression (5) soit encore à une distance visible de l'arbre (4) associé au son.

3. Dérouleur de cassette à commande électromécanique selon la revendication 2,
caractérisé en ce que la distance visible est comprise entre 0,2 et 1 mm.

4. Dérouleur de cassette à commande électromécanique (1) selon la revendication 1,
caractérisé en ce que la partie dentée sur la roue d'asservissement (11) s'étend sur environ 65°.

5. Dérouleur de cassette à commande électromécanique (1) selon la revendication 1,
caractérisé en ce que la roue pivotante (8) est agencée sous la forme d'une roue étagée.

6. Dérouleur de cassette à commande électromécanique (1) selon les revendications 1 à 5,
caractérisé en ce qu'entre le cadre (23) du dérouleur de cassette et la roue d'asservissement (11) est prévu un ressort (24), qui charge la roue d'asservissement avec un couple qui, lorsqu'on regarde le mécanisme de déroulement de cassette, agit en sens inverse des aiguilles d'une montre.
